# FASCICULE DE BREVET EUROPEEN

(11) **EP 0 988 228 B1**
(45) Date de publication et mention de la délivrance du brevet: **19.09.2001**
(21) Numéro de dépôt: 98929531.6
(22) Date de dépôt: 10.06.1998
(51) Int. Cl.: B64D 45/02

(54) **STRUCTURE ANTI-ETINCELAGE, NOTAMMENT POUR AERONEF**
FUNKENSICHERE STRUKTUR, INSBESONDERE FÜR FLUGZEUGE
SPARK RESISTANT STRUCTURE, IN PARTICULAR FOR AIRCRAFT

(30) Priorité: 20.06.1997 FR 9707696
(43) Date de publication de la demande: 29.03.2000
(73) Titulaire: Aerospatiale Matra, 75116 Paris (FR)
(72) Inventeur: ANDRIVET, Luc, F-92160 Antony (FR); AVENET, Jean-Pierre, F-75020 Paris (FR)
(74) Mandataire: Bonnetat, Christian
(86) Numéro de dépôt international: FR9801182
(87) Numéro de publication internationale: WO9858840

(56) Documents cités:
- EP-A- 0 248 122
- EP-A- 0 580 417
- US-A- 3 755 713
- US-A- 3 989 984
- US-A- 4 186 237
- US-A- 4 912 594

## Description

La présente invention concerne une structure anti-étincelage, notamment pour un aéronef.

On sait que de nombreux éléments d'aéronefs sont maintenant réalisés en matière composite, notamment à base de fibres de carbone, et que pour éviter la destruction, ou à tout le moins l'endommagement, de ces éléments composites en cas de foudroiement, on prévoit des moyens conducteurs de l'électricité pour dissiper l'énergie de la foudre. De tels moyens électriquement conducteurs sont généralement des couches conductrices, par exemple formées par des tissus, grillages ou treillis métalliques, disposés à la surface desdits éléments composites. Ainsi, les structures anti-étincelages connues, notamment pour aéronef, comportent généralement :
- un élément externe en forme de plaque, réalisé en matière composite et présentant une face extérieure portant une couche superficielle électriquement conductrice pour dissiper l'énergie de foudre et une face intérieure ;
- un élément interne en forme de plaque présentant une face extérieure et une face intérieure, lesdits éléments externe et interne étant disposés de façon que la face intérieure de l'élément externe soit au moins partiellement superposée à la face extérieure dudit élément interne et étant pourvus de trous alignés en regard ; et
- des moyens de fixation traversant lesdits trous alignés en regard et formant un alignement de moyens de fixation pour maintenir ensemble lesdits éléments dans une position de fixation, lesdits moyens de fixation étant électriquement en contact avec ladite couche superficielle conductrice, par exemple au moyen de doses de pâte électriquement conductrice introduites dans lesdits trous dudit élément externe, comme cela est décrit par le document EP-A-0248122.

Ainsi, lorsque la foudre frappe lesdits moyens de fixation (vis ou rivets métalliques, par exemple), le courant de foudre est transmis à ladite couche superficielle électriquement conductrice, où il se dissipe.

Cependant, une telle dissipation d'énergie suppose que le contact entre lesdits moyens de fixation et ladite couche superficielle conductrice soit électriquement bon, sinon le courant de foudre entraîne des détérioration de la structure, au niveau desdits moyens de fixation et desdits éléments interne et externe. Aussi, pour assurer un contact électrique satisfaisant entre les moyens de fixation et ladite couche superficielle conductrice, on a déjà prévu d'interposer des rondelles électriquement conductrices, par exemple en clinquant, respectivement associées auxdits moyens de fixation et chargées d'assurer le contact électrique de ceux-ci avec ladite couche conductrice superficielle. Cependant, la mise en place et la fixation de ces rondelles sont des opérations difficiles, longues et complexes, qui sont encore compliquées du fait que, afin que la surface extérieure de la surface soit lisse, il est généralement prévu que lesdits moyens de fixation présentent une tête fraisée venant se loger dans des fraisures pratiquées dans la face extérieure dudit élément externe.

L'utilisation de telles rondelles conductrices est donc coûteuse.

La présente invention a pour objet de remédier à ces inconvénients.

A cette fin, selon l'invention, la structure anti-étincelage mentionnée ci-dessus est remarquable :
- en ce que ledit élément externe comporte, sous ladite couche superficielle conductrice, une bande électriquement conductrice s'étendant longitudinalement dans la direction dudit alignement des moyens de fixation, traversée par lesdits moyens de fixation et en contact électrique avec eux ; et
- en ce que le contact électrique entre chacun desdits moyens de fixation et ladite bande conductrice, est obtenu au moyen de ladite dose de pâte électriquement conductrice introduite dans le trou dudit élément externe, traversé par ledit moyen de fixation.

Ainsi, du fait de la présence de ladite bande conductrice et de l'utilisation de doses d'une pâte conductrice, qui est par exemple constituée d'un élastomère chargé de particules conductrices, par exemple d'aluminium ou de carbone, il est possible d'éviter l'utilisation des rondelles de contact et les opérations de mise en place associées mentionnées ci-dessus, tout en obtenant une excellente protection antifoudre. Des essais de foudre ont montré que la structure de l'invention résistait sans dommage à des courants de foudre de l'ordre de 150 à 200 KA. De plus, une telle pâte conductrice assure par ailleurs l'étanchéité de la structure au niveau des moyens de fixation, ainsi qu'une protection contre la corrosion d'origine galvanique. La quantité de pâte électriquement conductrice introduite dans lesdits trous est suffisante pour couvrir la totalité du fût de chaque moyen de fixation.

Par ailleurs, on remarquera que ladite bande conductrice peut aisément être incorporée audit élément externe, au moment de sa réalisation.

De préférence, ladite bande électriquement conductrice s'étend transversalement de façon symétrique par rapport audit alignement de moyens de fixation et présente une conductivité électrique de qualité semblable à celle de ladite couche superficielle conductrice.

Afin d'accroître encore la capacité de dissipation d'énergie de foudre de la structure, ledit élément externe peut comporter, sous ladite bande conductrice, au moins une bande conductrice supplémentaire s'étendant longitudinalement dans la direction dudit alignement des moyens de fixation, traversée par lesdits moyens de fixation, en contact électrique avec eux et séparée de ladite bande conductrice par une épaisseur de matière composite.

Le contact électrique entre ladite bande conductrice supplémentaire et lesdits éléments de fixation peut également être assuré par la pâte conductrice.

De même que la bande conductrice, il est avantageux que ladite bande conductrice supplémentaire s'étende transversalement de façon symétrique par rapport audit alignement de moyens de fixation.

Pour faciliter la mise en oeuvre, il est préférable que le contour de ladite bande conductrice supplémentaire soit à l'aplomb du contour de la bande conductrice.

De préférence, du côté opposé au bord libre dudit élément externe, les bords de ladite bande conductrice et de ladite bande conductrice supplémentaire débordent l'aplomb du bord libre dudit élément interne

Lorsque, comme cela est usuel, lesdits moyens de fixation présentent une tête fraisée, ladite bande conductrice et ladite bande conductrice supplémentaire sont, tout comme la couche superficielle conductrice, au contact desdites têtes fraisées.

Dans la structure conforme à la présente invention, ledit élément interne peut être métallique, par exemple en aluminium, ou bien être une pièce de matière composite.

Les figures du dessin annexé feront bien comprendre comment l'invention peut être réalisée. Sur ces figures, des références identiques désignent des éléments semblables.

La figure 1 est une coupe transversale, passant par l'axe d'un boulon de fixation, d'une structure anti-étincelage conforme à la présente invention.

La figure 2 est une vue en plan, avec arrachements partiels, de la structure anti-étincelage de la figure 1.

Les figures 3 et 4 illustrent deux applications de la structure des figures 1 et 2.

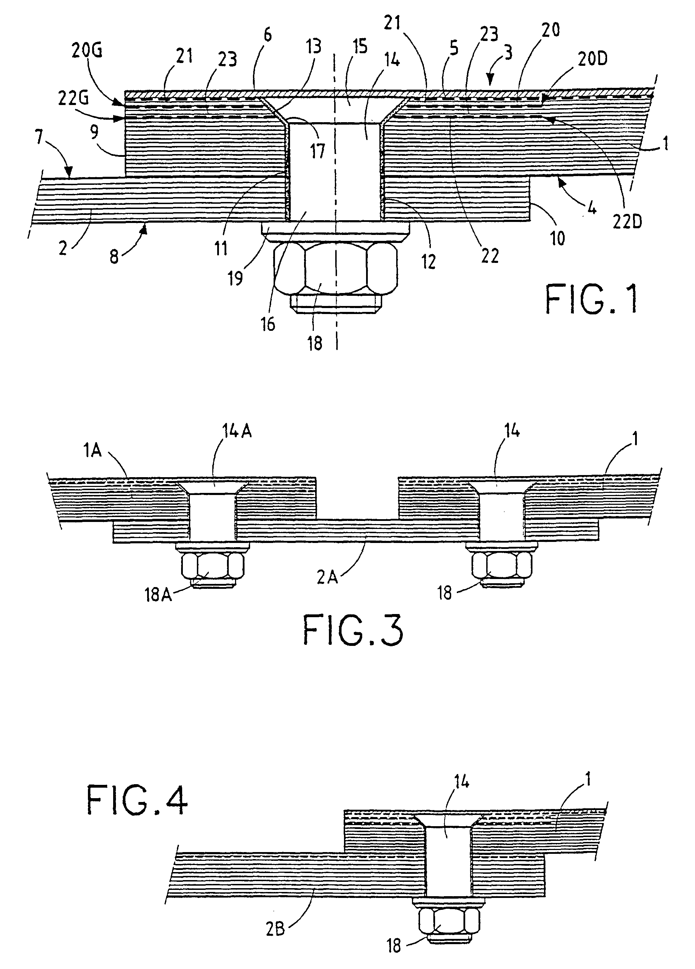

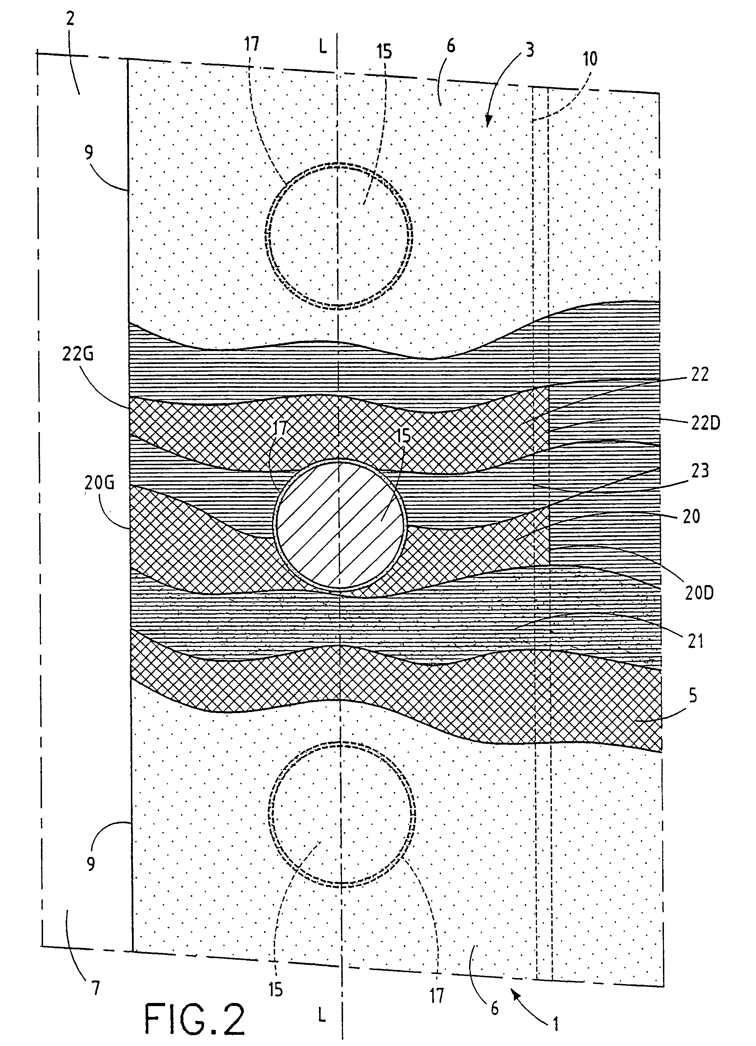

La structure anti-étincelage, conforme à la présente invention et représentée sur les figures 1 et 2, comporte deux éléments 1 et 2 en forme de plaques se chevauchant partiellement.

L'élément externe 1 est réalisé en matière composite, par exemple à base de fibres de carbone, et il comporte une face extérieure 3 et une face intérieure 4. Ladite face extérieure 3 porte, de façon connue, un grillage superficiel 5, électriquement conducteur, par exemple en fils de bronze, destiné à dissiper l'énergie de la foudre, lorsque celle-ci frappe l'élément externe 1. Le grillage superficiel 5, dont la masse peut être de l'ordre de 80 g/m², est lui-même recouvert d'une couche de peinture protectrice 6.

L'élément interne 2, qui peut être métallique ou réalisé en matière composite, comporte une face extérieure 7 et une face intérieure 8.

Les éléments 1 et 2 sont superposés de manière que la face intérieure 4 de l'élément externe 1 recouvre au moins partiellement la face extérieure 7 de l'élément interne 2, de sorte que le bord 9 de l'élément externe 1 se trouve à l'aplomb de ladite face extérieure 7 dudit élément interne 2 et que le bord 10 de l'élément interne 2 se trouve à l'aplomb de ladite face intérieure 4 dudit élément externe 1.

Dans leur zone de recouvrement, lesdits éléments 1 et 2 sont respectivement pourvus d'alignements de trous 11 et 12, lesdits alignements étant par exemple parallèles aux bords 9 et 10, respectivement. Lorsque lesdits éléments 1 et 2 sont dans leur position de recouvrement des figures 1 et 2, chaque trou 11 de l'élément 1 se trouve en regard d'un trou 12 de l'élément 2. Par ailleurs, du côté de la face extérieure 3 de l'élément externe 1, chaque trou 11 comporte une fraisure d'élargissement 13.

Dans chaque paire de trous 11, 12 en regard, est introduite une vis métallique 14 comportant une tête fraisée 15 et un fût au moins partiellement fileté 16. Les têtes fraisées 15 des vis métalliques 14 s'appliquent dans les fraisures 13, avec interposition d'une dose 17 de pâte électriquement conductrice, et le fût 16 de chaque vis 14 coopère avec un écrou 18. Les écrous 18 prennent appui, par exemple par l'intermédiaire de rondelles 19, sur la face intérieure 8 de l'élément interne 2, pour presser les têtes fraisées 15 des vis 14 dans les fraisures 13, de sorte que lesdits éléments 1 et 2 sont maintenus ensemble dans une position de fixation, telle que représentée sur les figures 1 et 2 et que lesdites têtes fraisées 15 écrasent lesdites doses 17 et font fluer la pâte conductrice tout le long du fût des vis métalliques 14. Ainsi, le grillage conducteur superficiel 5 est au contact électrique des têtes fraisées 15 desdites vis métalliques 14, par l'intermédiaire de la pâte électriquement conductrice 17.

Les têtes fraisées 15 sont extérieurement recouvertes par la peinture protectrice 6 et, comme le montrent la figure 2, les vis 14 forment un alignement de direction L-L.

Conformément à la présente invention, la structure anti-étincelage des figures 1 et 2 comporte de plus :
- une première bande 20 de grillage électriquement conducteur, par exemple réalisée en fils de bronze et ayant une masse de 230 g/m², disposée sous le grillage superficiel 5 et séparée de celui-ci par un film de colle ou de résine 21 fixant ledit grillage superficiel, ladite première bande de grillage 20 s'étendant longitudinalement dans la direction L-L de l'alignement des vis métalliques 14, étant traversée par ces dernières et en contact électrique avec leurs têtes fraisées 15 par l'intermédiaire des doses 17 de pâte électriquement conductrice ; et
- une seconde bande 22 de grillage électriquement conducteur, par exemple réalisée en fils de bronze et ayant une masse de 80 g/m², disposée sous la première bande de grillage 20 et séparée de celle-ci par une épaisseur 23 de matière composite, ladite seconde bande de grillage 22 s'étendant longitudinalement dans la direction L-L de l'alignement des vis métalliques 14, étant traversée par ces dernières et en contact électrique avec leurs têtes fraisées 15 par l'intermédiaire des doses 17 de pâte électriquement conductrice.

Lesdites première et seconde bandes 20 et 22 s'étendent transversalement de façon symétrique par rapport à l'alignement L-L des vis 14. L'un de leurs bords longitudinaux, 20G et 22G respectivement, affleure le bord 9 de l'élément externe 1. Leurs bords opposés, 20D et 22D respectivement, sont à l'aplomb l'un de l'autre et, de préférence, débordent l'aplomb du bord 10 de l'élément interne 2, en s'étendant plus loin que cet aplomb en direction de la partie centrale de l'élément externe 1.

L'élément interne 2 peut être métallique, par exemple en aluminium. Il peut alors servir d'éclisse 2A pour assembler l'élément externe 1 à un élément semblable 1A, par l'intermédiaire de moyens de fixation 14, 18 et 14A, 18A (voir la figure 3).

Cet élément interne 2 peut, en variante, être lui-même un élément composite 2B assemblé à l'élément externe 1 par les moyens de fixation 14, 18.

## Revendications

1. Structure anti-étincelage, notamment pour aéronef, comportant:
- un élément externe (1) en forme de plaque, réalisé en matière composite et présentant une face extérieure (3) portant une couche superficielle électriquement conductrice (5) pour dissiper l'énergie de foudre et une face intérieure (4) ;
- un élément interne (2) en forme de plaque présentant une face extérieure (7) et une face intérieure (8), lesdits éléments externe (1) et interne (2) étant disposés de façon que la face intérieure (4) de l'élément externe (1) soit au moins partiellement superposée à la face extérieure (7) dudit élément interne (2) et étant pourvus de trous (11, 12) alignés en regard ; et
- des moyens de fixation (14, 18) traversant lesdits trous alignés en regard (11, 12) et formant un alignement (L-L) de moyens de fixation (14, 18) pour maintenir ensemble lesdits éléments (1, 2) dans une position de fixation, lesdits moyens de fixation (14, 18) étant électriquement en contact avec ladite couche superficielle conductrice (5) au moyen de doses de pâte électriquement conductrice (17) introduites dans lesdits trous (11) dudit élément externe (1),
caractérisée :
- en ce que ledit élément externe (1) comporte, sous ladite couche superficielle conductrice (5), une bande électriquement conductrice (20) s'étendant longitudinalement dans la direction (L-L) dudit alignement des moyens de fixation (14, 18), traversée par lesdits moyens de fixation (14) et en contact électrique avec eux ; et
- en ce que le contact électrique entre chacun desdits moyens de fixation (14, 18) et ladite bande conductrice (20) est obtenu au moyen de ladite dose de pâte électriquement conductrice (17) introduite dans le trou (11) dudit élément externe (1), traversé par ledit moyen de fixation.

2. Structure selon la revendication 1,
**caractérisée en ce que** ladite bande électriquement conductrice (20) s'étend transversalement de façon symétrique par rapport audit alignement de moyens de fixation (14, 18).

3. Structure selon l'une des revendications 1 ou 2,
**caractérisée en ce que** ladite bande électriquement conductrice (20) présente une conductivité électrique semblable à celle de ladite couche superficielle conductrice (5).

4. Structure selon l'une des revendications 1 à 3,
**caractérisée en ce que** ledit élément externe (1) comporte, sous ladite bande conductrice (20), au moins une bande conductrice supplémentaire (22) s'étendant longitudinalement dans la direction dudit alignement des moyens de fixation (14, 18), traversée par lesdits moyens de fixation, en contact électrique avec eux et séparée de ladite bande conductrice par une épaisseur de matière composite (23).

5. Structure selon la revendication 4,
**caractérisée en ce que** ladite bande conductrice supplémentaire (22) s'étend transversalement de façon symétrique par rapport audit alignement de moyens de fixation (14, 18).

6. Structure selon les revendications 4 ou 5,
**caractérisée en ce que** le contour de ladite bande conductrice supplémentaire (22) est à l'aplomb du contour de ladite bande conductrice (20).

7. Structure selon l'une des revendications 4 à 6,
**caractérisée en ce que**, du côté opposé au bord libre (9) dudit élément externe (1), les bords (20D et 22D) de ladite bande conductrice (20) et de ladite bande conductrice supplémentaire (22) débordent l'aplomb du bord libre (10) dudit élément interne (2).

8. Structure selon l'une des revendications 4 à 7, dans laquelle lesdits moyens de fixation (14, 18) ont des têtes fraisées (15) venant se loger dans des fraisures (13) prévues dans la face extérieure (3) dudit élément externe (1),
**caractérisée en ce que** ladite couche superficielle conductrice (5) et lesdites bandes conductrices (20, 22) sont au contact desdites têtes fraisées (15).

9. Structure selon l'une des revendications 1 à 8,
**caractérisée en ce que** ledit élément interne (2) est métallique.

10. Structure selon l'une des revendications 1 à 8,
**caractérisée en ce que** ledit élément interne (2) est réalisé en une matière composite.

## Claims

1. Spark-resistant structure, particularly for aircraft, comprising:
- an external element (1), in the form of a sheet, made of a composite material and having an exterior face (3) bearing an electrically conducting surface layer (5) for dissipating lightning energy, and an interior face (4);
- an internal element (2) in the form of a sheet having an exterior face (7) and an interior face (8), the said external (1) and internal (2) elements being arranged in such a way that the interior face (4) of the external element (1) is at least partially superposed with the exterior face (7) of the said internal element (2), and being provided with. holes (11, 12) which are aligned opposite each other; and
- fixing means (14, 18) passing through the said aligned holes (11, 12) opposite each other and forming an alignment (L-L) of fixing means (14, 18) for holding the said elements (1, 2) together in a fixed position, the said fixing means (14, 18) being electrically in contact with the said conducting surface layer (5), by means of amounts of electrically conducting paste (17) introduced into the said holes (11) of the said external element (1),
characterized:
- in that the said external element (1) comprises, under the said conducting surface layer (5), an electrically conducting strip (20) extending longitudinally in the direction (L-L) of the said alignment of the fixing means (14, 18), through which strip the said fixing means (14, 18) pass, and which is in electrical contact with the said means; and
- in that the electrical contact between each of the said fixing means (14, 18) and the said conducting strip (20) is obtained by means of the said amount of electrically conducting paste (17) introduced into the hole (11) in the said external element (1), through which the said fixing means passes.

2. Structure according to Claim 1,
**characterized in that** the said electrically conducting strip (20) extends transversely symmetrically with respect to the said alignment of fixing means (14, 18).

3. Structure according to one of Claims 1 and 2,
**characterized in that** the said electrically conducting strip (20) has an electrical conductivity similar to that of the said conducting surface layer (5).

4. Structure according to one of Claims 1 to 3,
**characterized in that** the said external element (1) comprises, under the said conducting strip (20), at least one additional conducting strip (20) extending longitudinally in the direction of the said alignment of the fixing means (14, 18), through which strip the said fixing means pass, and which is in electrical contact with the said fixing means and separated from the said conducting strip by a thickness of composite material (23).

5. Structure according to Claim 4,
**characterized in that** the said additional conducting strip (22) extends transversely symmetrically with respect to the said alignment of fixing means (14, 18).

6. Structure according to Claim 4 or 5,
**characterized in that** the outline of the said additional conducting strip (22) is vertically aligned with the outline of the said conducting strip (20).

7. Structure according to one of Claims 4 to 6,
**characterized in that**, at the opposite end to the free edge (9) of the said external element (1), the edges (20D and 22D) of the said conducting strip (20) and of the said additional conducting strip (22) protrude beyond a position of vertical alignment with the free edge (10) of the said internal element (2).

8. Structure according to one of Claims 4 to 7, in which the said fixing means (14, 18) have countersunk heads (15) housed in countersinks (13) made in the exterior face (3) of the said external element (1),
**characterized in that** the said conducting surface layer (5) and the said conducting strips (20, 22) are in contact with the said countersunk heads (15).

9. Structure according to one of Claims 1 to 8,
**characterized in that** the said internal element (2) is metallic.

10. Structure according to one of Claims 1 to 8,
**characterized in that** the said internal element (2) is made of a composite material.

## Patentansprüche

1. Funkensichere Struktur, insbesondere für ein Flugzeug, die folgendes umfaßt:
- ein äußeres Element (1) in Form einer Platte, hergestellt aus Verbundmaterial, das eine Außenseite (3) mit einer elektrisch leitenden Oberflächenschicht (5) zur Ableitung der Blitzenergie und eine Innenseite (4) besitzt;
- ein inneres Element (2) in Form einer Platte mit einer Außenseite (7) und einer Innenseite (8), wobei das genannte äußere (1) und das genannte innere Element (2) so angeordnet sind, daß die Innenseite (4) des äußeren Elements (1) mindestens teilweise über der Außenseite (7) des genannten inneren Elements (2) liegt und die beiden Elemente mit gegenüber ausgerichteten Löchern (11, 12) versehen sind: und
- Befestigungsmittel (14, 18), die durch die genannten gegenüber ausgerichteten Löcher (11, 12) hindurchführen und eine Reihe (L-L) von Befestigungsmitteln (14, 18) bilden, um die genannten Elemente (1, 2) in einer Befestigungsposition zusammenzuhalten, wobei sich die genannten Befestigungsmittel (14, 18) über Mengen von elektrisch leitender Paste (17), die in die genannten Löcher (11) des genannten äußeren Elements (1) eingebracht wurden, elektrisch mit der genannten leitenden Oberflächenschicht (5) in Kontakt befinden:
**dadurch gekennzeichnet**,
- daß das genannte äußere Element (1) unter der genannten leitenden Oberflächenschicht (5) einen elektrisch leitenden Streifen (20) besitzt, der längs in Richtung (L-L) der genannten Reihe der Befestigungsmittel (14, 18) verläuft und durch den die genannten Befestigungsmittel (14) hindurchführen und der sich in elektrischem Kontakt mit ihnen befindet; und
- daß der elektrische Kontakt zwischen jedem der genannten Befestigungsmittel (14, 18) und dem genannten leitenden Streifen (20) erzielt wird mit Hilfe der genannten Menge elektrisch leitender Paste (17), die in das Loch (11) des genannten äußeren Elements (1), durch das das genannte Befestigungsmittel hindurchführt, eingebracht wurde.

2. Struktur gemäß Anspruch 1,
**dadurch gekennzeichnet, daß** der genannte elektrisch leitende Streifen (20) in Querrichtung symmetrisch zur genannten Reihe von Befestigungsmitteln (14, 18) verläuft.

3. Struktur gemäß einem der Ansprüche 1 oder 2,
**dadurch gekennzeichnet, daß** der genannte elektrisch leitende Streifen (20) eine elektrische Leitfähigkeit aufweist, die der der genannten leitenden Oberflächenschicht (5) ähnelt.

4. Struktur gemäß einem der Ansprüche 1 bis 3,
**dadurch gekennzeichnet, daß** das genannte äußere Element (1) unter dem genannten leitenden Streifen (20) mindestens einen zusätzlichen leitenden Streifen (22) umfaßt, der sich längs in Richtung der genannten Reihe der Befestigungsmittel (14, 18) erstreckt und durch den die genannten Befestigungsmittel hindurchführen, und der sich in elektrischem Kontakt mit ihnen befindet und von dem genannten leitenden Streifen durch eine Schicht Verbundmaterial (23) getrennt ist.

5. Struktur gemäß Anspruch 4,
**dadurch gekennzeichnet, daß** der genannte zusätzliche leitende Streifen (22) in Querrichtung symmetrisch zur genannten Reihe von Befestigungsmitteln (14, 18) verläuft.

6. Struktur gemäß den Ansprüchen 4 oder 5,
**dadurch gekennzeichnet, daß** die Außenlinie des genannten zusätzlichen leitenden Streifens (22) senkrecht zur Außenlinie des genannten leitenden Streifens (20) liegt.

7. Struktur gemäß einem der Ansprüche 4 bis 6,
**dadurch gekennzeichnet, daß** auf der der freien Kante (9) des genannten äußeren Elements (1) gegenüberliegenden Seite die Kanten (20D und 22D) des genannten leitenden Streifens (20) und des genannten zusätzlichen leitenden Streifens (22) über die Senkrechte der freien Kante (10) des genannten inneren Elements (2) hinausragen.

8. Struktur gemäß einem der Ansprüche 4 bis 7, in der die genannten Befestigungsmittel (14, 18) gefräste Köpfe (15) besitzen, die sich in Ausfräsungen (13) einpassen, die in der Außenseite (3) des genannten äußeren Elements (1) vorgesehen sind,
**dadurch gekennzeichnet, daß** die genannte leitende Oberflächenschicht (5) und die genannten leitenden Streifen (20, 22) sich mit den genannten gefrästen Köpfen (15) in Kontakt befinden.

9. Struktur gemäß einem der Ansprüche 1 bis 8,
**dadurch gekennzeichnet, daß** das genannte innere Element (2) aus Metall besteht.

10. Struktur gemäß einem der Ansprüche 1 bis 8,
**dadurch gekennzeichnet, daß** das genannte innere Element (2) aus einem Verbundmaterial hergestellt ist.
